(19) Europäisches Patentamt / European Patent Office / Office européen des brevets

(11) **EP 4 131 489 A1**

(12) **EUROPEAN PATENT APPLICATION**
published in accordance with Art. 153(4) EPC

(43) Date of publication:
08.02.2023 Bulletin 2023/06

(21) Application number: 21779591.3

(22) Date of filing: 25.01.2021

(51) International Patent Classification (IPC):
$H01M\ 4/36$ (1974.07)   $H01M\ 4/505$ (2010.01)
$H01M\ 4/525$ (2010.01)   $H01M\ 4/62$ (1974.07)
$H01M\ 10/052$ (2010.01)   $H01M\ 10/0562$ (2010.01)

(52) Cooperative Patent Classification (CPC):
H01M 4/36; H01M 4/505; H01M 4/525; H01M 4/62;
H01M 10/052; H01M 10/0562; Y02E 60/10

(86) International application number:
PCT/JP2021/002513

(87) International publication number:
WO 2021/199618 (07.10.2021 Gazette 2021/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.03.2020 JP 2020061627

(71) Applicant: **Panasonic Intellectual Property Management Co., Ltd.**
**Osaka-shi, Osaka 540-6207 (JP)**

(72) Inventor: **FUJINOKI, Norihito**
**Osaka 540-6207 (JP)**

(74) Representative: **Grünecker Patent- und Rechtsanwälte**
**PartG mbB**
**Leopoldstraße 4**
**80802 München (DE)**

(54) **COATED POSITIVE ELECTRODE ACTIVE MATERIAL AND BATTERY USING SAME**

(57)    A covered positive electrode active material 100 according to the present disclosure includes a particulate positive electrode active material 101 and a solid electrolyte 102 that covers a surface of the positive electrode active material 101. The solid electrolyte 102 forms a covering layer. The covering layer is formed such that recessed portions of the surface of the positive electrode active material are filled with the solid electrolyte 102. Protruding portions of the surface of the positive electrode active material 101 are exposed on a surface of the covered positive electrode active material 100. A degree of unevenness of a group of particles of the positive electrode active material 101 is defined as $\zeta_1$, a degree of unevenness of a group of particles of the covered positive electrode active material 100 is defined as $\zeta_2$, and a degree of change in unevenness R defined by formula (2) below is greater than or equal to 1.1.

$$R = \zeta_2/\zeta_1 \cdots (2)$$

FIG. 1

**Description**

Technical Field

The present disclosure relates to a covered positive electrode active material and a battery using the same.

Background Art

PTL 1 discloses an all-solid lithium battery that includes a positive electrode active material covered with a sulfide solid electrolyte.
PTL 2 discloses a positive electrode material and a secondary battery. The positive electrode material includes a positive electrode active material and a halide solid electrolyte. The halide solid electrolyte contains yttrium, chlorine, and bromine.

Citation List

Patent Literature

PTL 1: International Publication No. 2018/038037
PTL 2: International Publication No. 2019/135322

Summary of Invention

Technical Problem

In the related art, it is desirable to further improve the charge-discharge efficiency of a battery.

Solution to Problem

A covered positive electrode active material according to an aspect of the present disclosure is

a covered positive electrode active material including a particulate positive electrode active material and a solid electrolyte that covers a surface of the positive electrode active material,
wherein the solid electrolyte forms a covering layer,
the covering layer is formed such that recessed portions of the surface of the positive electrode active material are filled with the solid electrolyte, and
protruding portions of the surface of the positive electrode active material are exposed on a surface of the covered positive electrode active material,
wherein a degree of unevenness $\zeta$ of a group of particles is defined by formula (1) below,
[Math. 1]

$$\zeta = 1/n \sum_{i=1}^{n}\left(L_{ei}/L_{pi}\right) \cdots \quad (1)$$

where n is an integer of greater than or equal to 3, the integer representing the number of measured particles, $L_{pi}$ represents a perimeter of a contour of a sectional image of each particle, $L_{ei}$ represents a perimeter of an equivalent smooth ellipse having a long-short ratio and an area equal to a long-short ratio and an area of the sectional image of the particle, and the long-short ratio represents a ratio of a minor axis of the sectional image to a major axis of the sectional image,
a degree of unevenness of a group of particles of the positive electrode active material is defined as $\zeta_1$, and a degree of unevenness of a group of particles of the covered positive electrode active material is defined as $\zeta_2$, and
a degree of change in unevenness R defined by formula (2) below is greater than or equal to 1.1,

$$R = \zeta_2/\zeta_1 \cdots (2)$$

wherein the solid electrolyte has a composition represented by formula (3) below,

$$Li_\alpha M_\beta Cl_\gamma \cdots \qquad (3)$$

where $\alpha$, $\beta$, and $\gamma$ are values greater than 0, and M includes at least one selected from the group consisting of metal elements other than Li and metalloid elements. Advantageous Effects of Invention

According to the present disclosure, the charge-discharge efficiency of a battery can be improved.

Brief Description of Drawings

[Fig. 1] Fig. 1 is a sectional view illustrating a schematic configuration of a covered positive electrode active material in Embodiment 1.
[Fig. 2] Fig. 2 is a sectional view illustrating a schematic configuration of a positive electrode material in Embodiment 1.
[Fig. 3] Fig. 3 is a sectional view illustrating a schematic configuration of a battery in Embodiment 2.
[Fig. 4A] Fig. 4A is a binarized image of a sectional image obtained by observing a covered positive electrode active material of Example 1a with a scanning electron microscope.
[Fig. 4B] Fig. 4B is a binarized image of a sectional image obtained by observing a covered positive electrode active material of Comparative Example 1a with a scanning electron microscope.

Description of Embodiments

Embodiments of the present disclosure will be described below with reference to the drawings.
The following descriptions each indicate comprehensive or specific examples. Numerical values, compositions, shapes, film thicknesses, electrical characteristics, structures of secondary batteries, electrode materials, and other features described below are merely examples and are not intended to limit the present disclosure. In addition, structural elements that are not recited in the independent claims which embody the broadest concept are optional structural elements.

(Underlying Knowledge Forming Basis of the Present Disclosure)

In PTL 1, a positive electrode active material is covered with a sulfide solid electrolyte. Sulfide solid electrolyte are materials having a high ion conductivity but have a disadvantage in terms of oxidation resistance.
In PTL 2, a halide solid electrolyte containing bromine is used. As a result of extensive studies, the present inventor has found that when a halide solid electrolyte containing bromine is included in a positive electrode material, the halide solid electrolyte is subjected to oxidative decomposition during charging of a battery, and the charge-discharge efficiency of the battery decreases accordingly.
Specifically, in a material that contains bromine as an anion constituting a solid electrolyte, in the case of using a positive electrode active material having a potential of greater than or equal to 3.7 V relative to Li on average, the solid electrolyte may be decomposed by an oxidation reaction during charging, and the resulting oxidative decomposition product may function as a resistive layer. Herein, the oxidation reaction means, in addition to a normal charging reaction in which lithium and an electron are abstracted from a positive electrode active material in a positive electrode material, a side reaction in which an electron is also abstracted from a solid electrolyte containing an anion and in contact with the positive electrode active material. It is considered that, with this oxidation reaction, an oxidative decomposition layer having a poor lithium ion conductivity is formed between the positive electrode active material and the solid electrolyte, and the oxidative decomposition layer functions as a large interfacial resistance.
Bromine has a smaller electronegativity and a larger ionic radius than chlorine. It is considered that, therefore, the interaction force between bromine and a cationic component constituting the halide solid electrolyte is weak, and bromine is likely to be oxidized. Accordingly, a battery using a solid electrolyte that contains chlorine as an anion constituting the solid electrolyte is considered to exhibit good oxidation resistance, and the charge-discharge efficiency of the battery may be improved.
To suppress oxidative decomposition of a solid electrolyte and to suppress the formation of a high-resistance layer between a positive electrode active material and the solid electrolyte, it is necessary to select a solid electrolyte having good oxidation resistance. Furthermore, to improve the charge-discharge efficiency of a battery, it is necessary to reduce the interfacial resistance between the positive electrode active material and the solid electrolyte. However, in a battery using a positive electrode active material covered with a solid electrolyte, it is difficult to satisfy both the suppression of the formation of the high-resistance layer and the improvement in the charge-discharge efficiency of the battery.

On the basis of the above finding, the present inventor has conceived forming a covering layer with a solid electrolyte that contains chlorine as an anion constituting the solid electrolyte. As a result, it has been found that an oxidation reaction of the solid electrolyte can be suppressed to further improve the charge-discharge efficiency of a battery.

As a result of further extensive studies, the present inventor has ascertained a structure that is effective for reducing the interfacial resistance - the structure having recessed portions of uneven portions of the surface of the positive electrode active material being filled with the solid electrolyte, and having protruding portions of the uneven portions of the surface of the positive electrode active material being exposed on the surface of a covered positive electrode active material is effective for reduce the interfacial resistance. Specifically, the present inventor has found that the realization of a covered positive electrode active material having a smooth surface enables a decrease in the interfacial resistance between the positive electrode active material and the solid electrolyte and a further improvement in the charge-discharge efficiency of the battery.

(Summary of Aspects According to the Present Disclosure)

A covered positive electrode active material includes a particulate positive electrode active material and a solid electrolyte that covers a surface of the positive electrode active material,

wherein the solid electrolyte forms a covering layer,
the covering layer is formed such that recessed portions of the surface of the positive electrode active material are filled with the solid electrolyte, and
protruding portions of the surface of the positive electrode active material are exposed on a surface of the covered positive electrode active material,
wherein a degree of unevenness $\zeta$ of a group of particles is defined by formula (1) below,
[Math. 2]

$$\zeta = 1/n \sum_{i=1}^{n}\left(L_{ei}/L_{pi}\right) \cdot \cdot \cdot \quad (1)$$

,

where n is an integer of greater than or equal to 3, the integer representing the number of measured particles, $L_{pi}$ represents a perimeter of a contour of a sectional image of each particle, $L_{ei}$ represents a perimeter of an equivalent smooth ellipse having a long-short ratio and an area equal to a long-short ratio and an area of the sectional image of the particle, and the long-short ratio represents a ratio of a minor axis of the sectional image to a major axis of the sectional image,
a degree of unevenness of a group of particles of the positive electrode active material is defined as $\zeta_1$, and a degree of unevenness of a group of particles of the covered positive electrode active material is defined as $\zeta_2$, and
a degree of change in unevenness R defined by formula (2) below is greater than or equal to 1.1,

$$R = \zeta_2/\zeta_1 \cdots (2),$$

wherein the solid electrolyte has a composition represented by formula (3) below,

$$Li_{\alpha}M_{\beta}Cl_{\gamma} \cdots \quad (3)$$

where $\alpha$, $\beta$, and $\gamma$ are values greater than 0, and M includes at least one selected from the group consisting of metal elements other than Li and metalloid elements.

According to a first aspect, the charge-discharge efficiency of a battery can be improved.

In a second aspect of the present disclosure, for example, in the covered positive electrode active material according to the first aspect, a ratio of a mass of the solid electrolyte to a mass of the positive electrode active material may be in a range of greater than or equal to 3/100 and less than or equal to 1/10. According to the second aspect, the interfacial resistance between the positive electrode active material and the solid electrolyte can be reduced. As a result, the charge-discharge efficiency of a battery can be improved.

In a third aspect of the present disclosure, for example, in the covered positive electrode active material according to the first aspect, a ratio of a mass of the solid electrolyte to a mass of the positive electrode active material may be in a range of greater than or equal to 1/20 and less than or equal to 7/100. According to the third aspect, the charge-discharge efficiency of a battery can be further improved.

In a fourth aspect of the present disclosure, for example, in the covered positive electrode active material according to any one of the first to third aspects, in the sectional image of the covered positive electrode active material, a perimeter of a contour of the positive electrode active material is defined as L, and a total length of contact portions between the positive electrode active material and the covering layer is defined as C, and a coverage represented by a ratio C/L of the total length C to the perimeter L may be in a range of greater than or equal to 0.3 and less than or equal to 0.95. According to the fourth aspect, the interfacial resistance between the positive electrode active material and the solid electrolyte can be reduced. As a result, the charge-discharge efficiency of a battery can be improved.

In a fifth aspect of the present disclosure, for example, in the covered positive electrode active material according to any one of the first to fourth aspects, the covering layer may have an average thickness in a range of greater than or equal to 1 nm and less than or equal to 300 nm. According to the fifth aspect, the interfacial resistance between the positive electrode active material and the solid electrolyte can be reduced. As a result, the charge-discharge efficiency of a battery can be improved.

In a sixth aspect of the present disclosure, for example, in the covered positive electrode active material according to any one of the first to fourth aspects, the covering layer may have an average thickness in a range of greater than or equal to 2 nm and less than or equal to 200 nm. According to the sixth aspect, the interfacial resistance between the positive electrode active material and the solid electrolyte can be reduced. As a result, the charge-discharge efficiency of a battery can be improved.

In a seventh aspect of the present disclosure, for example, in the covered positive electrode active material according to any one of the first to sixth aspects, M may include yttrium. According to the seventh aspect, the ion conductivity of the solid electrolyte can be further improved. As a result, the charge-discharge efficiency of a battery can be further improved.

In an eighth aspect of the present disclosure, for example, in the covered positive electrode active material according to any one of the first to seventh aspects, $\alpha$, $\beta$, and $\gamma$ may satisfy $2.5 \leq \alpha \leq 3$, $1 \leq \beta \leq 1.1$, and $\gamma = 6$, respectively. According to the eighth aspect, the ion conductivity of the solid electrolyte can be further improved. As a result, the charge-discharge efficiency of a battery can be further improved.

In a ninth aspect of the present disclosure, for example, in the covered positive electrode active material according to any one of the first to eighth aspects, the positive electrode active material may contain a lithium nickel cobalt manganese oxide. According to the ninth aspect, the energy density of a battery can be further increased.

In a tenth aspect of the present disclosure, for example, in the covered positive electrode active material according to any one of the first to ninth aspects, the positive electrode active material may have a surface layer containing a lithium metal oxide. According to the tenth aspect, the charge-discharge efficiency of a battery can be further enhanced.

In an eleventh aspect of the present disclosure, for example, in the covered positive electrode active material according to the tenth aspect, the lithium metal oxide may contain lithium niobate. According to the eleventh aspect, the charge-discharge efficiency of a battery can be further enhanced.

A positive electrode material according to a twelfth aspect of the present disclosure includes:

the covered positive electrode active material according to any one of the first to eleventh aspects, and
a positive electrode solid electrolyte.

The use of the covered positive electrode active material according to the present disclosure for the positive electrode material provides a battery having a good charge-discharge efficiency.

In a thirteenth aspect of the present disclosure, for example, in the positive electrode material according to the twelfth aspect, the positive electrode solid electrolyte may include a halide solid electrolyte. The halide solid electrolyte exhibits a good ion conductivity.

In a fourteenth aspect of the present disclosure, for example, in the positive electrode material according to the twelfth or thirteenth aspect, the positive electrode solid electrolyte may include a sulfide solid electrolyte. The sulfide solid electrolyte exhibits a good ion conductivity.

A battery according to a fifteenth aspect of the present disclosure includes:

a positive electrode including the positive electrode material according to any one of the twelfth to fourteenth aspects,
a negative electrode, and
an electrolyte layer disposed between the positive electrode and the negative electrode.

According to the fifteenth aspect, the use of the positive electrode material according to the present disclosure for the positive electrode provides a battery having a good charge-discharge efficiency.

In a sixteenth aspect of the present disclosure, for example, in the battery according to the fifteenth aspect, the electrolyte layer may contain at least one selected from the group consisting of a solid electrolyte having the same composition as that of the solid electrolyte contained in the covering layer and a solid electrolyte having the same composition as that of the positive electrode solid electrolyte. According to the sixteenth aspect, charge-discharge characteristics of the battery can be further improved.

In a seventeenth aspect of the present disclosure, for example, in the battery according to the fifteenth aspect, the electrolyte layer may contain a halide solid electrolyte having a composition different from a composition of the solid electrolyte contained in the covering layer and/or a composition of the positive electrode solid electrolyte. According to the seventeenth aspect, charge-discharge characteristics of the battery can be further improved.

In an eighteenth aspect of the present disclosure, for example, in the battery according to any one of the fifteenth to seventeenth aspect, the electrolyte layer may contain a sulfide solid electrolyte. According to the eighteenth aspect, charge-discharge characteristics of the battery can be further improved.

A production method according to a nineteenth aspect of the present disclosure is a method for producing the covered positive electrode active material according to any one of the first to eleventh aspects, the method including:

processing the positive electrode active material and the solid electrolyte by a dry particle composing method, wherein the processing by the dry particle composing method includes applying at least one mechanical energy selected from the group consisting of impact, compression, and shear to the positive electrode active material and the solid electrolyte.

According to the nineteenth aspect, a desired covered positive electrode active material can be produced.

In a twentieth aspect of the present disclosure, for example, in the production method according to the nineteenth aspect, a ratio Da/Dc of an average particle diameter Da of the positive electrode active material to an average particle diameter Dc of the solid electrolyte may be greater than or equal to 2. According to the twentieth aspect, the interfacial resistance between the positive electrode active material and the covering layer can be reduced to further enhance the charge-discharge efficiency of a battery.

In a twenty-first aspect of the present disclosure, for example, in the production method according to the nineteenth aspect, a ratio Da/Dc of an average particle diameter Da of the positive electrode active material to an average particle diameter Dc of the solid electrolyte may be greater than or equal to 5. According to the twenty-first aspect, the interfacial resistance between the positive electrode active material and the covering layer can be further reduced to further enhance the charge-discharge efficiency of a battery.

Embodiments of the present disclosure will be described below with reference to the drawings. The present disclosure is not limited to the following embodiments.

(Embodiment 1)

(Covered Positive Electrode Active Material)

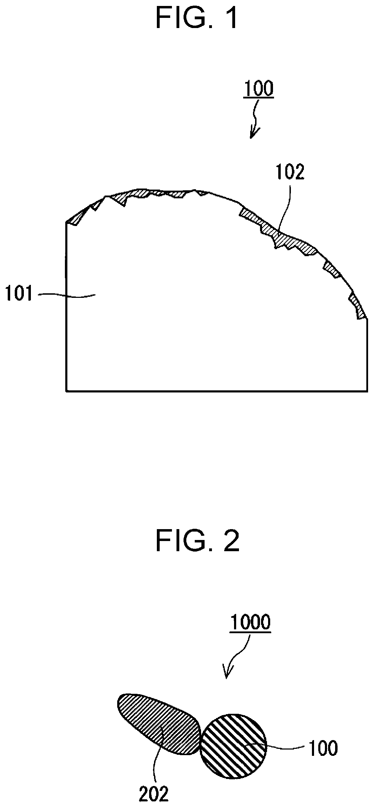

Fig. 1 is a sectional view illustrating a schematic configuration of a covered positive electrode active material 100 in Embodiment 1.

The covered positive electrode active material 100 in Embodiment 1 includes a particulate positive electrode active material 101 and a solid electrolyte 102 that covers a surface of the positive electrode active material 101. The solid electrolyte 102 forms a covering layer. The covering layer is formed such that recessed portions of the surface of the positive electrode active material 101 are filled with the solid electrolyte 102. Protruding portions of the surface of the positive electrode active material 101 are exposed on a surface of the covered positive electrode active material 100.

Herein, a degree of unevenness $\zeta$ of a group of particles is defined by formula (1) below.

[Math. 3]

$$\zeta = 1/n \sum_{i=1}^{n}\left(L_{ei}/L_{pi}\right) \cdot \cdot \cdot \ (1)$$

In formula (1), n is an integer of greater than or equal to 3, the integer representing the number of measured particles. The upper limit of n is not particularly limited and is, for example, 50. $L_{pi}$ represents a perimeter of a contour of a sectional image of each particle. $L_{ei}$ represents a perimeter of an equivalent smooth ellipse having a long-short ratio and an area equal to a long-short ratio and an area of the sectional image of the particle. The long-short ratio represents a ratio of a minor axis of the sectional image to a major axis of the sectional image. $L_{pi}$ and $L_{ei}$ can be calculated from a binarized image of a sectional SEM image obtained by observing a section of a particle with a scanning electron microscope (SEM).

The degree of unevenness $\zeta$ represents the degree of unevenness of the contour of the positive electrode active material 101 and the degree of unevenness of the contour of the covered positive electrode active material 100. The degree of unevenness $\zeta$ satisfies $0 \leq \zeta \leq 1$. As the shape of the particles is close to a smooth ellipse (circle), the degree of unevenness $\zeta$ approaches 1. As the degree of unevenness of the particles increases, the degree of unevenness $\zeta$ approaches 0.

In this specification, a degree of unevenness of a group of particles of the positive electrode active material 101 is defined as $\zeta_1$. A degree of unevenness of a group of particles of the covered positive electrode active material 100 is defined as $\zeta_2$. The degree of unevenness $\zeta_1$ of the positive electrode active material 101 can be calculated from perimeters Lp of particles of the positive electrode active material 101 excluding the covering layer and perimeters Le of equivalent smooth ellipses in a binarized image of a sectional SEM image of particles of the covered positive electrode active material 100. The equivalent smooth ellipses are each an ellipse having a long-short ratio and an area equal to a long-short ratio and a sectional area of a particle of the positive electrode active material 101. The degree of unevenness $\zeta_2$ of the covered positive electrode active material 100 can be calculated from perimeters Lp' of particles of the covered positive electrode active material 100 including the covering layer and perimeters Le' of equivalent smooth ellipses in a binarized image of a sectional SEM image of particles of the covered positive electrode active material 100. The equivalent smooth ellipses are each an ellipse having a long-short ratio and an area equal to a long-short ratio and a sectional area of a particle of the covered positive electrode active material 100.

Incidentally, when the covering layer is not in contact with the surface of the positive electrode active material 101 but is separated (detached) from the positive electrode active material 101, the separated portion is excluded from the covering layer, and each perimeter is calculated. That is, the separated portion is neither regarded as a covering layer nor treated as a covering layer. The same applies to a case where an equivalent smooth ellipse is specified. This interpretation also applies to the calculation of a coverage described later.

In the covered positive electrode active material 100 of this embodiment, a degree of change in unevenness R defined by formula (2) below is greater than or equal to 1.1.

$$R = \zeta_2 / \zeta_1 \cdots (2)$$

Specifically, the degree of change in unevenness R in the covered positive electrode active material 100 is defined as a ratio ($\zeta_2/\zeta_1$) of the degree of unevenness $\zeta_2$ of the covered positive electrode active material 100 to the degree of unevenness $\zeta_1$ of the positive electrode active material 101. The upper limit of the degree of change in unevenness R is a value obtained when the contour of the covered positive electrode active material 100 is a perfect circle. That is, when the degree of unevenness $\zeta_2$ of the covered positive electrode active material 100 is equal to 1, the degree of change in unevenness R has the upper limit. The upper limit of the degree of change in unevenness R is $1/\zeta_1$. For example, if the lower limit of the degree of unevenness (average) of the positive electrode active material 101 is 0.5, the upper limit of the degree of change in unevenness R is 2.0.

By covering recessed portions of uneven portions of the surface of the positive electrode active material 101 so as to be filled with the solid electrolyte 102 to realize a smooth covered positive electrode active material 100, the interfacial resistance between the positive electrode active material 101 and the solid electrolyte 102 can be reduced. It can be said that the degree of change in unevenness R clearly represents the degree of filling of the recessed portions with the solid electrolyte 102. When at least one of protruding portions of uneven portions of the surface of the positive electrode active material 101 is exposed on the surface (outermost surface) of the covered positive electrode active material 100, electron conductivity of adjacent particles of the covered positive electrode active material 100 can be ensured. That is, a protruding portion and another protruding portion come in contact with each other to thereby sufficiently ensure electron conductivity between particles of the covered positive electrode active material 100. In this respect, it is desirable that a plurality of protruding portions be exposed on the surface (outermost surface) of the covered positive electrode active material 100. In such a case, the probability of the contact between protruding portions increases. Incidentally, it is not essential that the whole of a protruding portion be exposed. Even when a part of a protruding portion is exposed, the above effect is obtained.

According to the above configuration, the charge-discharge efficiency of a battery can be improved.

In the covered positive electrode active material 100, a ratio of a mass of the solid electrolyte 102 to a mass of the positive electrode active material 101 may be in a range of greater than or equal to 3/100 and less than or equal to 1/10. When the ratio of the mass of the solid electrolyte 102 is greater than or equal to 3/100, the proportion of the solid electrolyte 102 that covers the surface of the positive electrode active material 101 is sufficiently high, and thus the recessed portions can be sufficiently filled with the solid electrolyte 102. When the ratio of the mass of the solid electrolyte 102 is less than or equal to 1/10, the solid electrolyte 102 that covers the surface of the positive electrode active material 101 is less likely to hinder the electron transfer between particles of the positive electrode active material 101. In this case, a battery in which the covered positive electrode active material 100 is used in a positive electrode material can achieve a good charge-discharge efficiency.

According to the above configuration, the interfacial resistance between the positive electrode active material 101 and the solid electrolyte 102 can be reduced. As a result, the charge-discharge efficiency of a battery can be improved.

In the covered positive electrode active material 100, a ratio of a mass of the solid electrolyte 102 to a mass of the positive electrode active material 101 may be in a range of greater than or equal to 1/20 and less than or equal to 7/100.

According to the above configuration, the charge-discharge efficiency of a battery can be further improved.

In the sectional image of the covered positive electrode active material 100, a perimeter of a contour of the positive electrode active material 101 is defined as L, and a total length of contact portions between the positive electrode active material 101 and the covering layer is defined as C. In this case, a coverage represented by a ratio C/L of the total length C to the perimeter L may be in a range of greater than or equal to 0.3 and less than or equal to 0.95. When the coverage is greater than or equal to 0.3, the recessed portions are sufficiently filled with the solid electrolyte 102. When the coverage is less than or equal to 0.95, the solid electrolyte 102 that covers the surface of the positive electrode active material 101 is less likely to hinder the electron transfer between particles of the positive electrode active material 101. In this case, a battery in which the covered positive electrode active material 100 is used in a positive electrode material can achieve a good charge-discharge efficiency.

According to the above configuration, the interfacial resistance between the positive electrode active material 101 and the solid electrolyte 102 can be reduced. As a result, the charge-discharge efficiency of a battery can be improved.

The coverage may be in a range of greater than or equal to 0.7 and less than or equal to 0.92.

According to the above configuration, the charge-discharge efficiency of a battery can be further improved.

The coverage can be calculated from a binarized image of a sectional SEM image of the covered positive electrode active material 100. In a plane of the same field of view of a sectional SEM image of the covered positive electrode active material 100, the perimeter L of the contour of the positive electrode active material 101 and the total length C of contact portions between the positive electrode active material 101 and the covering layer can be determined by image processing. The ratio C/L is defined as a coverage of the covering layer on the covered positive electrode active material 100. Note that when the covering layer is not in contact with the surface of the positive electrode active material 101 but is separated from the positive electrode active material 101, the portion is excluded from the contact portions, and the total length C is calculated. That is, this portion is not regarded as a contact portion.

The covering layer may have an average thickness in a range of, for example, greater than or equal to 1 nm and less than or equal to 300 nm. When the average thickness of the covering layer is greater than or equal to 1 nm, the recessed portions can be sufficiently filled with the solid electrolyte 102. When the average thickness of the covering layer is less than or equal to 300 nm, the solid electrolyte 102 that covers the surface of the positive electrode active material 101 is less likely to hinder the electron transfer between particles of the positive electrode active material 101. The average thickness of the covering layer can be determined by, for example, measuring a thickness of the covering layer at randomly selected 16 points in a sectional SEM image of the covered positive electrode active material 100 obtained with a scanning electron microscope, and calculating the average of the measured values. The covering layer may have an average thickness in a range of, for example, greater than or equal to 2 nm and less than or equal to 200 nm.

According to the above configuration, the interfacial resistance between the positive electrode active material 101 and the solid electrolyte 102 can be reduced. As a result, the charge-discharge efficiency of a battery can be improved.

(Solid Electrolyte 102 Constituting Covering Layer)

As the solid electrolyte 102 that constitutes the covering layer, a material having lithium ion conductivity, having low electron conductivity, and having oxidation resistance may be used.

As the solid electrolyte 102, an ionic crystalline halide solid electrolyte material may be used. The halide solid electrolyte material need not necessarily contain sulfur.

A material that contains chlorine as an anion constituting the solid electrolyte 102 may be used. In other words, a material that contains a chloride ion alone as an anion constituting the solid electrolyte 102 may be used.

More specifically, the solid electrolyte 102 has a composition represented by formula (3) below. In formula (3), $\alpha$, $\beta$, and $\gamma$ are values greater than 0, and M includes at least one selected from the group consisting of metal elements other than Li and metalloid elements.

$$Li_\alpha M_\beta Cl_\gamma \cdots \qquad (3)$$

The "metalloid elements" include B, Si, Ge, As, Sb, and Te.

The metal elements include all elements included in groups 1 to 12 of the periodic table except for hydrogen, and all elements included in groups 13 to 16 except for B, Si, Ge, As, Sb, Te, C, N, P, O, S, and Se. In other words, the "metal elements" refer to a group of elements that can become cations when forming inorganic compounds with halogen compounds.

When at least one element selected from the group consisting of metal elements other than Li and metalloid elements is contained in the solid electrolyte 102, the solid electrolyte 102 has a higher ion conductivity than a solid electrolyte 102 constituted by Li and a halogen element alone, such as LiI. Therefore, when the solid electrolyte 102 containing at least one element selected from the group consisting of metal elements other than Li and metalloid elements is used in a battery, the charge-discharge efficiency of the battery can be improved.

In formula (3), M may include yttrium. That is, the solid electrolyte 102 may contain Y as a metal element.

According to the above configuration, the ion conductivity of the solid electrolyte 102 can be further improved. As a result, the charge-discharge efficiency of a battery can be further improved.

The solid electrolyte 102 containing Y may be a compound represented by a composition formula $Li_aMe_bY_cCl_6$. Here, $a + mb + 3c = 6$ and $c > 0$ are satisfied. Me is at least one selected from the group consisting of metal elements other than Li and Y and metalloid elements, and m is the valence of Me.

At least one element selected from the group consisting of Mg, Ca, Sr, Ba, Zn, Sc, Al, Ga, Bi, Zr, Hf, Ti, Sn, Ta, Gd, Sm, Tb, and Nb may be used as Me.

According to the above configuration, the ion conductivity of the solid electrolyte 102 can be further improved.

In formula (3), $2.5 \leq \alpha \leq 3$, $1 \leq \beta \leq 1.1$, and $\gamma = 6$ may be satisfied.

According to the above configuration, the ion conductivity of the solid electrolyte 102 can be further improved. As a result, the charge-discharge efficiency of a battery can be further improved.

The solid electrolyte 102 may have a composition represented by formula (A1) below. In formula (A1), $0 < d < 2$ is satisfied.

$$Li_{6-3d}Y_dCl_6 \cdots \qquad (A1)$$

According to the above configuration, the ion conductivity of the solid electrolyte 102 can be further improved. As a result, the charge-discharge efficiency of a battery can be further improved.

The solid electrolyte 102 may have a composition represented by formula (A2) below.

$$Li_3YCl_6 \cdots \qquad (A2)$$

According to the above configuration, the ion conductivity of the solid electrolyte 102 can be further improved. As a result, the charge-discharge efficiency of a battery can be further improved.

The solid electrolyte 102 may have a composition represented by formula (A3) below. In formula (A3), $0 < \delta \leq 0.15$ is satisfied.

$$Li_{3-3\delta}Y_{1+\delta}Cl_6 \cdots \qquad (A3)$$

According to the above configuration, the ion conductivity of the solid electrolyte 102 can be further improved. As a result, the charge-discharge efficiency of a battery can be further improved.

The "solid electrolyte" in the present disclosure is not limited to solid electrolytes that strictly satisfy the above composition formula but includes solid electrolytes that contain a trace amount of impurities other than the constituent elements shown in the composition formula. For example, in the covering material, impurities other than the constituent elements shown in the composition formula may be contained in an amount of less than or equal to 10% by mole.

(Method for Producing Solid Electrolyte 102)

The solid electrolyte 102 (first solid electrolyte) in Embodiment 1 can be produced by the following method.

Raw material powders of halides are prepared so as to obtain a mixing ratio of a desired composition. For example, in the case of the production of $Li_3YCl_6$, LiCl and $YCl_3$ are prepared in a molar ratio of 3:1. In this case, "M" and "Me" in the above composition formula can be determined by selecting the types of raw material powders. The values "$\alpha$", "$\beta$", "$y$", "d", and "$\delta$" described above can be adjusted by adjusting the raw materials, the mixing ratio, and the synthesis process.

After the raw material powders are sufficiently mixed, the raw material powders are mixed, pulverized, and allowed to react with each other by a mechanochemical milling method. Alternatively, after the raw material powders are sufficiently mixed, the mixed powder may be heat-treated in vacuum or an inert atmosphere. The heat treatment may be performed, for example, at a temperature higher than or equal to 100°C and lower than or equal to 650°C for longer than or equal to one hour. As a result, the solid electrolyte 102 having the composition described above is obtained.

The configuration of the crystal phase (crystal structure) in the covering material can be determined by adjusting the reaction method between the raw material powders and reaction conditions.

(Positive Electrode Active Material 101)

The positive electrode active material 101 is, for example, a material capable of occluding and releasing metal ions (for example, lithium ions). Examples of the positive electrode active material 101 include lithium transition metal oxides, transition metal fluorides, polyanionic materials, fluorinated polyanionic materials, transition metal sulfides, transition metal oxysulfides, and transition metal oxynitrides. Examples of the lithium transition metal oxides include Li(Ni, Co,Al)$O_2$, Li(Ni,Co,Mn)$O_2$, and LiCoO$_2$. One or a mixture of two or more selected from these may be used as the positive electrode active material 101.

When a lithium transition metal oxide is used as the positive electrode active material 101, the cost of production of the positive electrode can be reduced, and an average discharge voltage can be increased.

The positive electrode active material 101 may contain a lithium nickel cobalt manganese oxide. The positive electrode active material 101 may contain Li(NiCoMn)$O_2$. Only a lithium nickel cobalt manganese oxide may be used as the positive electrode active material 101. According to the above configuration, the energy density of a battery can be further increased.

The shape of particles of the positive electrode active material 101 is not particularly limited. The shape of the particles of the positive electrode active material 101 may be a spherical, ellipsoidal, scaly, or fibrous shape.

In Embodiment 1, the positive electrode active material 101 may have a surface layer containing a lithium metal oxide. The lithium metal oxide constituting the surface layer has a composition different from the composition of a lithium transition metal oxide constituting a main portion (portion excluding the surface layer) of the positive electrode active material 101. For example, LiNbO$_3$ (lithium niobate) may be used as the lithium metal oxide. When the positive electrode active material 101 has a surface layer containing LiNbO$_3$, side reaction between the positive electrode active material 101 and the covering layer is suppressed during charging. Thus, according to this configuration, in the covered positive electrode active material 100 in Embodiment 1, the formation of a high-resistance layer on the surface of the positive electrode active material 101 can be effectively suppressed. As a result, the charge-discharge efficiency of a battery can be further enhanced.

When the positive electrode active material 101 has the surface layer, the surface layer is also regarded as a portion of the positive electrode active material 101.

(Method for Producing Covered Positive Electrode Active Material 100)

A method for producing the covered positive electrode active material 100 in Embodiment 1 includes, for example, processing the positive electrode active material 101 and the solid electrolyte 102 that constitutes a covering layer by a dry particle composing method. The processing by the dry particle composing method includes applying at least one mechanical energy selected from the group consisting of impact, compression, and shear to the positive electrode active material 101 and the solid electrolyte 102. The positive electrode active material 101 and the solid electrolyte 102 are mixed in an appropriate ratio.

According to the above method, a desired covered positive electrode active material 100 can be produced.

An apparatus that may be used in the method for producing the covered positive electrode active material 100 is not particularly limited and may be any apparatus that can apply mechanical energy such as impact, compression, and shear to a mixture. Examples of the apparatus that can apply mechanical energy include ball mills and compression shear processing apparatuses (particle composing machine) such as "Mechanofusion" (manufactured by Hosokawa Micron Corporation) and "Nobilta" (manufactured by Hosokawa Micron Corporation). Of these, "Mechanofusion" and "Nobilta" are desirable, and "Nobilta" is more desirable.

"Mechanofusion" is a particle composing machine using a dry mechanical composing technique of applying strong mechanical energy to a plurality of different types of material particles. In Mechanofusion, mechanical energy such as compression, shear, and friction is applied to a powder raw material charged between a rotatable vessel and a press head, and composing of particles thereby occurs.

"Nobilta" is a particle composing machine using a dry mechanical composing technique that has been developed from a particle composing technique in order to perform composing using nanoparticles as a raw material. Nobilta applies mechanical energy of impact, compression, and shear to a plurality of raw material powders to produce composite particles.

"Nobilta" is configured so that, in a horizontal cylindrical mixing vessel, a rotor disposed so as to have a predetermined gap between the inner wall of the mixing vessel and the rotor is rotated at a high speed to repeat a plurality of times a process of allowing raw material powders to coercively pass through the gap. Thus, impact, compression, and shear force can be applied to the mixture to produce composite particles of the positive electrode active material 101 and the solid electrolyte 102. Conditions such as a rotational speed of the rotor, the processing time, and the amount of charge can be appropriately adjusted.

In the production of the covered positive electrode active material 100, a powder of the solid electrolyte 102 is used. A ratio Da/Dc of an average particle diameter Da of the positive electrode active material 101 to an average particle diameter Dc of the solid electrolyte 102 may be greater than or equal to 2. In this case, recessed portions of uneven portions of the surface of the positive electrode active material 101 are densely filled with the solid electrolyte 102. As a result, the interfacial resistance between the positive electrode active material 101 and the covering layer can be reduced to further enhance the charge-discharge efficiency of a battery.

The ratio Da/Dc may be greater than or equal to 5. In this case, recessed portions of uneven portions of the surface of the positive electrode active material 101 are more densely filled with the solid electrolyte 102. As a result, the interfacial resistance between the positive electrode active material 101 and the covering layer can be further reduced to further enhance the charge-discharge efficiency of a battery.

The average particle diameters of the positive electrode active material 101 and the covering material can be measured, for example, using a SEM image. Specifically, the averages of equivalent circle diameters of randomly selected 50 particles of the positive electrode active material 101 and randomly selected 50 particles of the solid electrolyte 102 are calculated using a SEM image to determine the average particle diameters of the positive electrode active material 101 and the solid electrolyte 102. The "equivalent circle diameter" means a diameter of a circle having an area equal to the area of an image of a particular particle.

(Positive Electrode Material 1000)

Fig. 2 is a sectional view illustrating a schematic configuration of a positive electrode material 1000 in Embodiment 1.

The positive electrode material 1000 in Embodiment 1 includes the above-described covered positive electrode active material 100 in Embodiment 1 and a positive electrode solid electrolyte 202. The use of the covered positive electrode active material 100 in Embodiment 1 for the positive electrode material provides a battery having a good charge-discharge efficiency.

The positive electrode solid electrolyte 202 includes, for example, a solid electrolyte having a high ion conductivity.

The positive electrode solid electrolyte 202 may have the same composition as the composition of the solid electrolyte 102 that constitutes the covering layer. For example, $Li_3YCl_6$ may be used as the positive electrode solid electrolyte 202.

The positive electrode solid electrolyte 202 may include a halide solid electrolyte. Examples of the halide solid electrolyte that may be used include $Li_3(Ca,Y,Gd)X_6$, $Li_2MgX_4$, $Li_2FeX_4$, $Li(Al,Ga,In)X_4$, $Li_3(Al,Ga,In)X_6$, and LiI. Here, element X in these solid electrolytes is at least one selected from the group consisting of Cl, Br, and I. In the present disclosure, when elements in a formula is expressed as, for example, "(Al,Ga,In)", this expression represents at least one element selected from the element group in the parentheses. That is, "(Al,Ga,In)" represents the same as "at least one selected from the group consisting of Al, Ga, and In". The same applies to cases of other elements. Halide solid electrolytes exhibit a good ion conductivity.

The positive electrode solid electrolyte 202 may be a halide solid electrolyte. For example, the halide solid electrolyte contains lithium, yttrium, chlorine, and bromine. The halide solid electrolyte may be $Li_3YBr_2Cl_4$.

The positive electrode solid electrolyte 202 may include a sulfide solid electrolyte. Examples of the sulfide solid electrolyte that may be used include $Li_2S-P_2S_5$, $Li_2S-SiS_2$, $Li_2S-B_2S_3$, $Li_2S-GeS_2$, $Li_{3.25}Ge_{0.25}P_{0.75}S_4$, and $Li_{10}GeP_2S_{12}$. For example, LiX, $Li_2O$, $MO_q$, or $Li_pMO_q$ may be added to the above. Here, element X in "LiX" is one or two or more elements selected from the group consisting of F, Cl, Br, and I. Element M in "$MO_q$" and "$Li_pMO_q$" is one or two or more elements selected from the group consisting of P, Si, Ge, B, Al, Ga, In, Fe, and Zn. Here, p and q in "$MO_q$" and "$Li_pMO_q$" are each independently a natural number.

The positive electrode solid electrolyte 202 may be a sulfide solid electrolyte. For example, the sulfide solid electrolyte may contain lithium sulfide and phosphorus sulfide. The sulfide solid electrolyte may be $Li_2S-P_2S_5$. Sulfide solid electrolytes exhibit a good ion conductivity.

One or a mixture of two or more selected from the above solid electrolytes may be used as the positive electrode solid electrolyte 202.

The shape of the positive electrode solid electrolyte 202 is not particularly limited. The shape of the positive electrode solid electrolyte 202 may be, for example, an acicular, spherical, or ellipsoidal shape. The shape of the positive electrode solid electrolyte 202 may be granular.

When the shape of the positive electrode solid electrolyte 202 is granular (for example, spherical), the median diameter of the positive electrode solid electrolyte 202 may be less than or equal to 100 μm. When the median diameter of the positive electrode solid electrolyte 202 is less than or equal to 100 μm, the covered positive electrode active material 100 and the positive electrode solid electrolyte 202 can form a satisfactorily dispersed state in the positive electrode material 1000. Therefore, charge-discharge characteristics of a battery including the positive electrode material 1000 are improved.

The median diameter of the positive electrode solid electrolyte 202 may be less than or equal to 10 $\mu$m. According to this configuration, the covered positive electrode active material 100 and the positive electrode solid electrolyte 202 can form a more satisfactorily dispersed state in the positive electrode material 1000.

The median diameter of the positive electrode solid electrolyte 202 may be smaller than the median diameter of the covered positive electrode active material 100. According to this configuration, the covered positive electrode active material 100 and the positive electrode solid electrolyte 202 can form a more satisfactorily dispersed state in the positive electrode material 1000.

The median diameter of the covered positive electrode active material 100 may be greater than or equal to 0.1 $\mu$m and less than or equal to 100 $\mu$m.

When the median diameter of the covered positive electrode active material 100 is greater than or equal to 0.1 $\mu$m, the covered positive electrode active material 100 and the positive electrode solid electrolyte 202 can form a satisfactorily dispersed state in the positive electrode material 1000. As a result, charge-discharge characteristics of a battery including the positive electrode material 1000 are improved. When the median diameter of the covered positive electrode active material 100 is less than or equal to 100 $\mu$m, the lithium diffusion rate in the covered positive electrode active material 100 is improved. Therefore, a battery including the positive electrode material 1000 can be operated at a high output.

The median diameter of the covered positive electrode active material 100 may be larger than the median diameter of the positive electrode solid electrolyte 202. In this manner, the covered positive electrode active material 100 and the positive electrode solid electrolyte 202 can form a satisfactorily dispersed state.

In the positive electrode material 1000, the positive electrode solid electrolyte 202 and the covering layer of the covered positive electrode active material 100 may be in contact with each other.

The positive electrode material 1000 in Embodiment 1 may include a plurality of positive electrode solid electrolytes 202 and a plurality of covered positive electrode active materials 100.

In the positive electrode material 1000 in Embodiment 1, the content of the positive electrode solid electrolyte 202 and the content of the covered positive electrode active material 100 may be the same or different from each other.

(Embodiment 2)

Embodiment 2 will be described below. Descriptions overlapping with those in Embodiment 1 above will be omitted as appropriate.

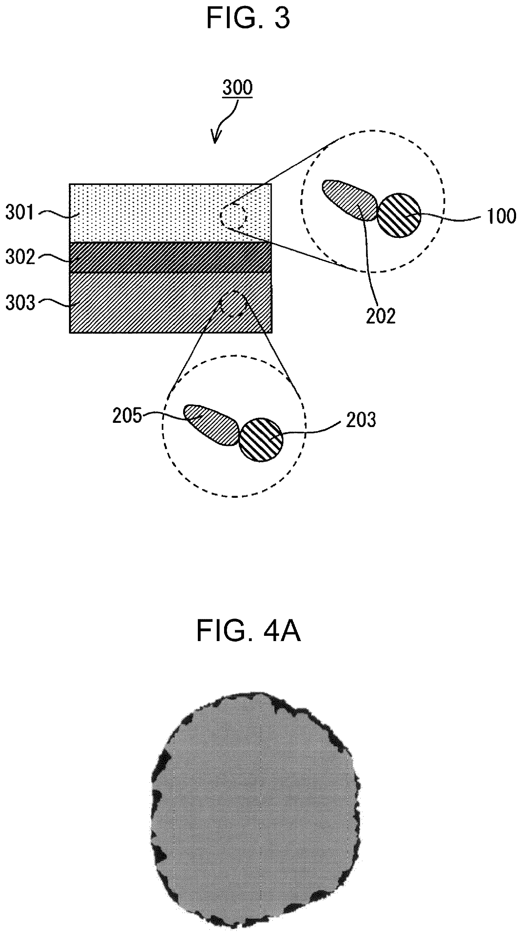

Fig. 3 is a sectional view illustrating a schematic configuration of a battery in Embodiment 2.

A battery 300 in Embodiment 2 includes a positive electrode 301 including the positive electrode material 1000 described in Embodiment 1 above, an electrolyte layer 302, and a negative electrode 303. The use of the positive electrode material 1000 in the positive electrode 301 provides the battery 300 having a good charge-discharge efficiency.

The positive electrode 301 includes a material capable of occluding and releasing metal ions (for example, lithium ions). The positive electrode 301 includes the covered positive electrode active material 100 and the positive electrode solid electrolyte 202.

When a volume ratio of the positive electrode active material 101 to a total of the solid electrolyte 102 and the positive electrode solid electrolyte 202 included in the positive electrode 301 is represented by "v1:100 - v1", $30 \leq v1 \leq 95$ may be satisfied. Here, v1 represents a volume fraction of the positive electrode active material 101 when a total volume of the positive electrode active material 101, the solid electrolyte 102, and the positive electrode solid electrolyte 202 included in the positive electrode 301 is assumed to be 100. When $30 \leq v1$ is satisfied, a sufficient energy density of the battery 300 is likely to be ensured. When $v1 \leq 95$ is satisfied, the operation of the battery 300 at a high output is further facilitated.

The thickness of the positive electrode 301 may be greater than or equal to 10 $\mu$m and less than or equal to 500 $\mu$m. When the thickness of the positive electrode 301 is greater than or equal to 10 $\mu$m, a sufficient energy density of the battery 300 can be ensured. When the thickness of the positive electrode 301 is less than or equal to 500 $\mu$m, the operation of the battery 300 at a high output can be realized.

The electrolyte layer 302 is disposed between the positive electrode 301 and the negative electrode 303.

The electrolyte layer 302 is a layer containing an electrolyte material. The electrolyte material may include, for example, a solid electrolyte (second solid electrolyte). That is, the electrolyte layer 302 may be a solid electrolyte layer.

At least one selected from the group consisting of a halide solid electrolyte, a sulfide solid electrolyte, an oxide solid electrolyte, a polymeric solid electrolyte, and a complex hydride solid electrolyte may be used as the solid electrolyte contained in the electrolyte layer 302.

The electrolyte layer 302 may contain at least one selected from the group consisting of a solid electrolyte having the same composition as that of the solid electrolyte 102 contained in the covering layer of the covered positive electrode active material 100 and a solid electrolyte having the same composition as that of the positive electrode solid electrolyte 202.

When the electrolyte layer 302 contains a halide solid electrolyte, the halide solid electrolyte may have the same composition as the composition of a halide solid electrolyte included in the solid electrolyte 102 or may have the same composition as the composition of a halide solid electrolyte included in the positive electrode solid electrolyte 202. When the composition of the halide solid electrolyte included in the solid electrolyte 102 is different from the composition of the halide solid electrolyte included in the positive electrode solid electrolyte 202, the electrolyte layer 302 may contain the halide solid electrolytes having the compositions different from each other.

According to the above configuration, charge-discharge characteristics of the battery 300 can be further improved.

The electrolyte layer 302 may contain a halide solid electrolyte having a composition different from a composition of the solid electrolyte 102 contained in the covering layer and/or a composition of the positive electrode solid electrolyte 202.

According to the above configuration, charge-discharge characteristics of the battery 300 can be further improved.

The electrolyte layer 302 may contain a sulfide solid electrolyte. The sulfide solid electrolyte contained in the electrolyte layer 302 may have the same composition as the composition of a sulfide solid electrolyte included in the positive electrode solid electrolyte 202.

According to the above configuration, charge-discharge characteristics of the battery can be further improved.

When the electrolyte layer 302 contains a sulfide solid electrolyte having good reduction stability, a low-potential negative electrode material, such as graphite or metallic lithium, can be used for the negative electrode 303. As a result, the energy density of the battery 300 can be improved.

The electrolyte layer 302 may contain an oxide solid electrolyte. Examples of the oxide solid electrolyte that is contained in the electrolyte layer 302 and that may be used include NASICON solid electrolyte materials represented by $LiTi_2(PO_4)_3$ and element-substituted derivatives thereof, $(LaLi)TiO_3$-based perovskite solid electrolyte materials, LISICON solid electrolyte materials represented by $Li_{14}ZnGe_4O_{16}$, $Li_4SiO_4$, $LiGeO_4$, and element-substituted derivatives thereof, garnet solid electrolyte materials represented by $Li_7La_3Zr_2O_{12}$ and element-substituted derivatives thereof, $Li_3PO_4$ and N-substituted derivatives thereof, and glass and glass ceramics based on Li-B-O compounds such as $LiBO_2$ and $Li_3BO_3$ and doped with, for example, $Li_2SO_4$ and $Li_2CO_3$.

The solid electrolyte contained in the electrolyte layer 302 may include a polymeric solid electrolyte. The polymeric solid electrolyte contained in the electrolyte layer 302 may be, for example, a compound of a polymeric compound and a lithium salt. The polymeric compound may have an ethylene oxide structure. A polymeric compound having an ethylene oxide structure can contain a larger amount of lithium salt. Accordingly, the ion conductivity can be further enhanced. Examples of the lithium salt that may be used include $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, and $LiC(SO_2CF_3)_3$. These lithium salts may be used alone or in combination of two or more thereof.

The electrolyte layer 302 may contain a complex hydride solid electrolyte. Examples of the complex hydride solid electrolyte that is contained in the electrolyte layer 302 and that may be used include $LiBH_4$-LiI and $LiBH_4$-$P_2S_5$.

The electrolyte layer 302 may contain the above-described solid electrolyte as a main component. That is, the electrolyte layer 302 may contain the solid electrolyte in an amount of, for example, greater than or equal to 50% in terms of mass ratio (i.e., greater than or equal to 50% by mass) relative to the total of the electrolyte layer 302.

According to the above configuration, output characteristics of the battery 300 can be further improved.

The electrolyte layer 302 may contain the solid electrolyte in an amount of, for example, greater than or equal to 70% in terms of mass ratio (i.e., greater than or equal to 70% by mass) relative to the total of the electrolyte layer 302.

According to the above configuration, output characteristics of the battery 300 can be further improved.

The electrolyte layer 302 may further contain, for example, unavoidable impurities, the starting materials used to synthesize a solid electrolyte, by-products, and decomposition products, while containing the solid electrolyte as a main component.

The electrolyte layer 302 may contain the solid electrolyte in an amount of, for example, 100% in terms of mass ratio (i.e., 100% by mass) relative to the total of the electrolyte layer 302 excluding impurities that are unavoidably mixed.

According to the above configuration, output characteristics of the battery 300 can be further improved.

As described above, the electrolyte layer 302 may be constituted only by the solid electrolyte.

The electrolyte layer 302 may contain two or more of materials listed as the solid electrolyte materials. For example, the electrolyte layer 302 may contain a halide solid electrolytes and a sulfide solid electrolyte.

The thickness of the electrolyte layer 302 may be greater than or equal to 1 μm and less than or equal to 300 μm. When the thickness of the electrolyte layer 302 is greater than or equal to 1 μm, the possibility of a short circuit between the positive electrode 301 and the negative electrode 303 decreases. When the thickness of the electrolyte layer 302 is less than or equal to 300 $\mu$m, the operation at a high output is facilitated. That is, an appropriate adjustment of the thickness of the electrolyte layer 302 enables sufficient safety of the battery 300 to be ensured and enables the battery 300 to be operated at a high output.

The negative electrode 303 includes a material capable of occluding and releasing metal ions (for example, lithium ions). The negative electrode 303 includes a negative electrode active material 203 (for example, negative electrode active material particles).

An example of the negative electrode active material 203 that may be used is a metal material, a carbon material, an oxide, a nitride, a tin compound, or a silicon compound. The metal material may be a single metal. Alternatively, the metal material may be an alloy. An example of the metal material is lithium metal or a lithium alloy. An example of the carbon material is natural graphite, coke, graphitizing carbon, carbon fibers, spherical carbon, artificial graphite, or amorphous carbon. In view of the capacity density, silicon, tin, a silicon compound, or a tin compound can be suitably used. One or a mixture of two or more selected from these materials may be used as the negative electrode active material 203.

The negative electrode 303 may include a negative electrode solid electrolyte 205. According to the above configuration, the lithium ion conductivity of the inside of the negative electrode 303 can be enhanced to achieve the operation at a high output. The materials described as examples of the solid electrolyte of the electrolyte layer 302 may be used as the negative electrode solid electrolyte 205.

The median diameter of particles of the negative electrode active material 203 may be larger than the median diameter of the negative electrode solid electrolyte 205. In this manner, the negative electrode active material 203 and the negative electrode solid electrolyte 205 can form a satisfactorily dispersed state.

With regard to a volume ratio "v2:100 - v2" of the negative electrode active material 203 to the negative electrode solid electrolyte 205 included in the negative electrode 303, $30 \leq v2 \leq 95$ may be satisfied. When $30 \leq v2$ is satisfied, a sufficient energy density of the battery 300 is likely to be ensured. When $v2 \leq 95$ is satisfied, the operation of the battery 300 at a high output is further facilitated.

The thickness of the negative electrode 303 may be greater than or equal to 10 $\mu$m and less than or equal to 500 $\mu$m. When the thickness of the negative electrode 303 is greater than or equal to 10 $\mu$m, a sufficient energy density of the battery 300 is likely to be ensured. When the thickness of the negative electrode 303 is less than or equal to 500 $\mu$m, the operation of the battery 300 at a high output is further facilitated.

At least one selected from the group consisting of the positive electrode 301, the electrolyte layer 302, and the negative electrode 303 may contain a binder in order to improve adhesion between particles. The binder is used to improve a binding property of the material forming the electrode. Examples of the binder include polyvinylidene fluoride, polytetrafluoroethylene, polyethylene, polypropylene, aramid resin, polyamide, polyimide, polyamide-imide, polyacrylonitrile, polyacrylic acid, polymethyl acrylate, polyethyl acrylate, polyhexyl acrylate, polymethacrylic acid, polymethyl methacrylate, polyethyl methacrylate, polyhexyl methacrylate, polyvinyl acetate, polyvinylpyrrolidone, polyether, polyethersulfone, hexafluoropolypropylene, styrene-butadiene rubber, and carboxymethylcellulose. Examples of the binder that may be used further include copolymers of two or more materials selected from tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more selected from these may be used as the binder.

At least one of the positive electrode 301 and the negative electrode 303 may contain a conductive aid in order to enhance electronic conductivity. Examples of the conductive aid that may be used include graphite such as natural graphite and artificial graphite; carbon black such as acetylene black and Ketjen Black; conductive fibers such as carbon fibers and metal fibers; fluorinated carbon; metal powders such as an aluminum powder; conductive whiskers such as zinc oxide whiskers and potassium titanate whiskers; conductive metal oxides such as titanium oxide; and conductive polymer compounds such as polyaniline, polypyrrole, and polythiophene. The use of a carbon conductive aid enables the cost reduction to be achieved.

The battery 300 in Embodiment 2 may be formed as batteries having various shapes, such as coin batteries, cylindrical batteries, prismatic batteries, sheet batteries, button batteries, flat batteries, and stacked batteries.

The battery 300 in Embodiment 2 may be produced by, for example, preparing each of the positive electrode material, the material for forming the electrolyte layer, and the material for forming the negative electrode in Embodiment 1, and making a stack in which the positive electrode, the electrolyte layer, and the negative electrode are disposed in this order by a known method.

EXAMPLES

The present disclosure will now be described in more detail with reference to Examples.

(Example 1a)

[Preparation of Solid Electrolyte]

In a glove box in an argon atmosphere with a dew point of lower than or equal to -60°C and an oxygen value of less than or equal to 5 ppm, raw material powders of LiCl and $YCl_3$ were weighed so as to have a molar ratio of $LiCl:YCl_3$ = 3:1. These raw material powders were mixed in an agate mortar to prepare a mixture. Next, the mixture was heat-treated in an inert atmosphere at 500°C for 12 hours to obtain a heat-treated product represented by a composition formula $Li_3YCl_6$ (hereinafter, expressed as LYC). The heat-treated product was ground in an agate mortar to obtain an LYC powder having an average particle diameter of 5 $\mu$m. The LYC powder and an appropriate amount of a solvent were mixed, a planetary ball mill (Model P-7, manufactured by Fritsch) was used to perform milling processing for 20 minutes at 200 rpm, the solvent was then removed, and drying was performed. As a result, an LYC powder having an average particle diameter of 0.5 $\mu$m was obtained as a solid electrolyte. The particle diameter of the solid electrolyte was a median diameter and determined by calculating the average of equivalent circle diameters of randomly selected 50 particles among particles of the solid electrolyte observed at a magnification of 5000 times with a scanning electron microscope (3D real surface view microscope, VE-8800, manufactured by Keyence Corporation).

[Positive Electrode Active Material]

As a positive electrode active material, $Li(NiCoMn)O_2$ (hereinafter, expressed as NCM) having an average particle diameter of 5 $\mu$m was used.

[Preparation of Covered Positive Electrode Active Material]

Covering of the positive electrode active material with the solid electrolyte was conducted by using a particle composing machine (Nobilta, NOB-MINI, manufactured by Hosokawa Micron Corporation). In a vessel of the NOB-MINI, 50 g of NCM and 2.5 g of the LYC powder were put, and NCM and LYC were subjected to composing processing at a rotational speed of 6000 rpm, for an operating time of 15 minutes, with an electrical power of 640 W to prepare a covered positive electrode active material.

(Example 1b)

A covered positive electrode active material was prepared by the same procedure as that in Example 1a except that the amount of LYC mixed was 5 g.

(Comparative Example 1a)

A covered positive electrode active material was prepared by the same procedure as that in Example 1a except that the amount of LYC was mixed 1.25 g.

(Comparative Example 1b)

A covered positive electrode active material was prepared by the same procedure as that in Example 1a except that LYC having an average particle diameter of 5 $\mu$m was used instead of LYC having an average particle diameter of 0.5 $\mu$m.

[Measurement of Coverage and Average Thickness of Covering Layer]

The degree of change in unevenness, the coverage, and the average thickness of the covering layer of each of the covered positive electrode active materials of Example 1a, Example 1b, Comparative Example 1a, and Comparative Example 1b were measured. For the measurement, randomly selected three particles of the covered positive electrode active material were used. A sectional SEM image of the covered positive electrode active material was obtained using a scanning electron microscope (SU-70, manufactured by Hitachi, Ltd.). The particles of the covered positive electrode active material were selected in an average field of view in which a uniform covered positive electrode active material was observed while avoiding a portion where materials, such as the positive electrode active material and the solid electrolyte, aggregate. The degree of change in unevenness, the coverage, and the average thickness of the covering layer were calculated from the sectional SEM image of the covered positive electrode active material. The results are shown in Table 1. The "covering weight ratio" is a weight ratio of the positive electrode active material and the solid electrolyte of the covering layer.

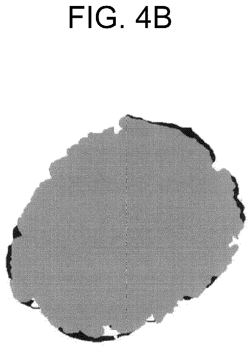

Figs. 4A and 4B are binarized images of the sectional SEM images of the covered positive electrode active materials of Example 1a and Comparative Example 1b, respectively.

[Table 1]

| | Particle diameter of LYC ($\mu$m) | Covering weight ratio | Degree of change in unevenness | Coverage | Average thickness (nm) |
|---|---|---|---|---|---|
| Example 1a | 0.5 | 100:5 | 1.12 | 0.75 | 130 |
| Example 1b | 0.5 | 100:10 | 1.20 | 0.92 | 203 |
| Comparative Example 1a | 0.5 | 100:2.5 | 1.05 | 0.25 | 22 |
| Comparative Example 1b | 5 | 100:5 | 1.03 | 0.41 | 64 |

Referring to Table 1, the covered positive electrode active materials of Examples 1a and 1b each had a degree of change in unevenness of greater than or equal to 1.1. The degrees of change in unevenness of the covered positive electrode active materials of Example 1a and Example 1b were 1.12 and 1.20, respectively. The covered positive electrode active materials of Examples 1a and 1b each had a coverage of greater than or equal to 0.7 and less than or equal to 0.95. The coverages of the covered positive electrode active materials of Example 1a and Example 1b were 0.75 and 0.92, respectively. The covering layers of the covered positive electrode active materials of Examples 1a and 1b each had an average thickness of greater than or equal to 100 nm and less than or equal to 300 nm. The average thicknesses of the covering layers of the covered positive electrode active materials of Example 1a and Example 1b were 130 nm and 203 nm, respectively.

Referring to Fig. 4A, in the covered positive electrode active material of Example 1a, the covering layer was formed such that recessed portions of uneven portions of the surface of the light gray positive electrode active material were filled with the black solid electrolyte. Protruding portions of the uneven portions of the surface of the light gray positive electrode active material were partially exposed on the surface of the covered positive electrode active material.

Since the covering layer is densely formed so as to fill the recessed portion of the uneven portions of the surface of the positive electrode active material, the interfacial resistance decreases when lithium ions move between the surface of the positive electrode active material and the covering layer. Since the protruding portions of the uneven portions of the surface of the positive electrode active material are partially exposed, electron conductivity of adjacent particles of the positive electrode active material is ensured. As a result, the charge-discharge efficiency of the battery can be improved.

In contrast, referring to Fig. 4B, in the covered positive electrode active material of Comparative Example 1b, the covering layer was formed such that recessed portions of the light gray positive electrode active material were voids. Some of the recessed portions of the uneven portions of the surface of the light gray positive electrode active material were not sufficiently filled with the black solid electrolyte.

[Preparation of Battery]

(Example 2a, Example 2b, and Comparative Examples 2a to 2c)

The following steps were performed using the above-described covered positive electrode active materials of Examples 1a and 1b and Comparative Examples 1a and 1b.

In a glove box in an argon atmosphere with a dew point of lower than or equal to -60°C and an oxygen value of less than or equal to 5 ppm, any of the covered positive electrode active material of Example 1a, Example 1b, Comparative Example 1a, and Comparative Example 1b and $Li_2S$-$P_2S_5$ serving as a positive electrode solid electrolyte were weighed. The volume ratio of the positive electrode active material to the total of the solid electrolyte forming the covering layer and the positive electrode solid electrolyte was 60:40. These were mixed in an agate mortar to prepare positive electrode materials of Example 2a, Example 2b, Comparative Example 2a, and Comparative Example 2b.

In an insulating outer cylinder, 80 mg of $Li_2S$-$P_2S_5$ was placed and press-molded at a pressure of 80 MPa to obtain an electrolyte layer. Subsequently, 14 mg of any of the positive electrode materials of Example 1a, Example 1b, Comparative Example 1a, and Comparative Example 1b was placed in terms of positive electrode active material equivalent and press-molded at a pressure of 720 MPa to obtain a positive electrode layer. Subsequently, metallic In (thickness: 200 $\mu$m), metallic Li (thickness: 300 $\mu$m), and metallic In (thickness: 200 $\mu$m) were stacked in this order on the electrolyte layer on the side of the opposite electrode. This was press-molded at a pressure of 80 MPa to obtain a negative electrode layer. Subsequently, stainless steel current collectors were disposed on the top and the bottom of the stack including the positive electrode layer, the electrolyte layer, and the negative electrode layer, and current collection leads were attached to the current collectors. Lastly, an insulating ferrule was used to isolate the inside of the insulating outer cylinder from the outer atmosphere and to hermetically seal the insulating outer cylinder. Thus, batteries were prepared. The inner diameter of the insulating outer cylinder used in the Examples was 9.5 mm, and the projected area of the electrodes was 0.71 cm$^2$.

(Comparative Example 2c)

A battery was prepared by the same procedure as that in Example 2a except that a positive electrode active material having no covering layer was used as a positive electrode material.

A battery evaluation was performed under conditions described below using the batteries of Example 2a, Example 2b, Comparative Example 2a, Comparative Example 2b, and Comparative Example 2c.

The batteries of Examples and Comparative Examples were placed in a constant temperature chamber at 85°C.

The batteries were each subjected to constant current charging at a current of 140 μA which corresponded to 0.05 C rate (20 hour rate) relative to the theoretical capacity of the battery, and the charging was terminated at a voltage of 3.68 V (corresponding to a voltage of 4.3 V on a Li/Li$^+$ basis). Subsequently, the batteries were each subjected to constant voltage charging at a voltage of 3.68 V, and the charging was terminated at a current of less than or equal to 28 μA corresponding to 0.01 C rate. After the charging, the interfacial resistance between the covered positive electrode active material and the positive electrode solid electrolyte was determined by measuring the impedance by an alternating-current impedance method. The impedance was measured with a voltage amplitude of 5 mV in a measurement frequency range of 1 MHz to 0.1 Hz at 85°C. The results are shown in Table 2. Subsequently, the batteries were left to stand for three days in the open circuit state. Subsequently, the batteries were each subjected to discharging at a current of 140 μA which corresponded to 0.05 C rate, and the discharging was terminated at a voltage of 1.88 V (corresponding to a voltage of 2.5 V on a Li/Li$^+$ basis).

As described above, the discharge capacity and the capacity efficiency of each of the batteries of Examples and Comparative Examples were determined. The results are shown in Table 2 below. The capacity efficiency is a ratio of the discharge capacity to the charge capacity. The capacity efficiency has the same meaning as the charge-discharge efficiency.

Referring to Table 2, the batteries of Examples 2a and 2b exhibited higher discharge capacities and higher capacity efficiencies than the batteries of Comparative Examples 2a to 2c. The batteries of Examples 2a and 2b exhibited lower interfacial resistances than the batteries of Comparative Examples 2a to 2c.

[Table 2]

|  | Discharge capacity (mAh/g) | Capacity efficiency (%) | Interfacial resistance ($\Omega$) |
|---|---|---|---|
| Example 2a | 198 | 93.7 | 11 |
| Example 2b | 195 | 91.6 | 8.3 |
| Comparative Example 2a | 185 | 86.5 | 27 |
| Comparative Example 2b | 178 | 87.8 | 60 |
| Comparative Example 2c | 185 | 88.8 | 64 |

(Example 3)

A battery was prepared by the same procedure as that in Example 2a except that Li$_3$YCl$_6$ was used as the positive electrode solid electrolyte of the positive electrode material.

(Comparative Example 3a)

A battery was prepared by the same procedure as that in Comparative Example 2b except that Li$_3$YCl$_6$ was used as the positive electrode solid electrolyte of the positive electrode material.

(Comparative Example 3b)

A battery was prepared by the same procedure as that in Comparative Example 2c except that $Li_3YCl_6$ was used as the positive electrode solid electrolyte of the positive electrode material.

The battery evaluation was performed under the same conditions as those in Example 2a using the batteries of Example 3, Comparative Example 3a, and Comparative Example 3b. The results are shown in Table 3 below.

Referring to Table 3, also in the case where a halide solid electrolyte was used as the positive electrode solid electrolyte, the battery of Example 3 exhibited a higher discharge capacity and a higher capacity efficiency than the batteries of Comparative Examples 3a and 3b. In addition, the battery of Example 3 exhibited a lower interfacial resistance than the batteries of Comparative Examples 3a and 3b.

[Table 3]

|  | Discharge capacity (mAh/g) | Capacity efficiency (%) | Interfacial resistance ($\Omega$) |
|---|---|---|---|
| Example 3 | 205 | 96.9 | 12 |
| Comparative Example 3a | 191 | 95.1 | 55 |
| Comparative Example 3b | 183 | 95.2 | 35 |

(Example 4)

A battery was prepared by the same procedure as that in Example 2a except that NCM having a lithium niobate film with an average thickness of 6 nm was used, $Li_3YBr_2Cl_4$ was used as the positive electrode solid electrolyte, and a conductive aid (VGCF-H, manufactured by Showa Denko K.K.) was added to the positive electrode material in an amount of 2% by weight relative to the positive electrode active material.

(Comparative Example 4)

A battery was prepared by the same procedure as that in Comparative Example 2b except that NCM having a lithium niobate film with an average thickness of 6 nm was used, $Li_3YBr_2Cl_4$ was used as the positive electrode solid electrolyte, and a conductive aid (VGCF-H) was added to the positive electrode material in an amount of 2% by weight relative to the positive electrode active material.

The battery evaluation was performed under the same conditions as those in Example 2a using the batteries of Example 4 and Comparative Example 4. The results are shown in Table 4 below.

Referring to Table 4, also in the case where a halide solid electrolyte having a composition different from the composition of the solid electrolyte of the covering layer was used as the positive electrode solid electrolyte, the battery of Example 4 exhibited a higher discharge capacity and a higher capacity efficiency than the battery of Comparative Example 4. The battery of Example 4 exhibited a lower interfacial resistance than the battery of Comparative Example 4.

[Table 4]

|  | Discharge capacity (mAh/g) | Capacity efficiency (%) | Interfacial resistance ($\Omega$) |
|---|---|---|---|
| Example 4 | 208 | 94.3 | 1.1 |
| Comparative Example 4 | 203 | 90.1 | 8.2 |

Industrial Applicability

The technologies of the present disclosure are useful for, for example, all-solid lithium ion secondary batteries.

Reference Signs List

100 covered positive electrode active material
101 positive electrode active material
102 solid electrolyte (covering layer)
202 positive electrode solid electrolyte

203    negative electrode active material
205    negative electrode solid electrolyte
300    battery
301    positive electrode
302    electrolyte layer
303    negative electrode
1000    positive electrode material


**Claims**

1.  A covered positive electrode active material comprising a particulate positive electrode active material and a solid electrolyte that covers a surface of the positive electrode active material,

    wherein the solid electrolyte forms a covering layer,
    the covering layer is formed such that recessed portions of the surface of the positive electrode active material are filled with the solid electrolyte, and
    protruding portions of the surface of the positive electrode active material are exposed on a surface of the covered positive electrode active material,
    wherein a degree of unevenness $\zeta$ of a group of particles is defined by formula (1) below,
    [Math. 1]

    $$\zeta = 1/n \sum_{i=1}^{n}\left(L_{ei}/L_{pi}\right) \cdot \cdot \cdot \quad (1)$$

    where n is an integer of greater than or equal to 3, the integer representing the number of measured particles, Lpi represents a perimeter of a contour of a sectional image of each particle, Lei represents a perimeter of an equivalent smooth ellipse having a long-short ratio and an area equal to a long-short ratio and an area of the sectional image of the particle, and the long-short ratio represents a ratio of a minor axis of the sectional image to a major axis of the sectional image,
    a degree of unevenness of a group of particles of the positive electrode active material is defined as $\zeta_1$, and a degree of unevenness of a group of particles of the covered positive electrode active material is defined as $\zeta_2$, and a degree of change in unevenness R defined by formula (2) below is greater than or equal to 1.1,

    $$R = \zeta_2/\zeta_1 \cdots (2)$$

    wherein the solid electrolyte has a composition represented by formula (3) below,

    $$Li_{\alpha}M_{\beta}Cl_{\gamma} \cdots \quad (3)$$

    where $\alpha$, $\beta$, and $\gamma$ are values greater than 0, and M includes at least one selected from the group consisting of metal elements other than Li and metalloid elements.

2.  The covered positive electrode active material according to claim 1,
    wherein a ratio of a mass of the solid electrolyte to a mass of the positive electrode active material is in a range of greater than or equal to 3/100 and less than or equal to 1/10.

3.  The covered positive electrode active material according to claim 1,
    wherein a ratio of a mass of the solid electrolyte to a mass of the positive electrode active material is in a range of greater than or equal to 1/20 and less than or equal to 7/100.

4.  The covered positive electrode active material according to any one of claims 1 to 3,

    wherein in the sectional image of the covered positive electrode active material, a perimeter of a contour of the positive electrode active material is defined as L, and a total length of contact portions between the positive electrode active material and the covering layer is defined as C, and
    a coverage represented by a ratio C/L of the total length C to the perimeter L is in a range of greater than or equal to 0.3 and less than or equal to 0.95.

5. The covered positive electrode active material according to any one of claims 1 to 4,
wherein the covering layer has an average thickness in a range of greater than or equal to 1 nm and less than or equal to 300 nm.

6. The covered positive electrode active material according to any one of claims 1 to 4,
wherein the covering layer has an average thickness in a range of greater than or equal to 2 nm and less than or equal to 200 nm.

7. The covered positive electrode active material according to any one of claims 1 to 6,
wherein M includes yttrium.

8. The covered positive electrode active material according to any one of claims 1 to 7,
wherein $\alpha$, $\beta$, and $\gamma$ satisfy $2.5 \leq \alpha \leq 3$, $1 \leq \beta \leq 1.1$, and $\gamma = 6$, respectively.

9. The covered positive electrode active material according to any one of claims 1 to 8,
wherein the positive electrode active material contains a lithium nickel cobalt manganese oxide.

10. The covered positive electrode active material according to any one of claims 1 to 9,
wherein the positive electrode active material has a surface layer containing a lithium metal oxide.

11. The covered positive electrode active material according to claim 10, wherein the lithium metal oxide contains lithium niobate.

12. A positive electrode material comprising:

    the covered positive electrode active material according to any one of claims 1 to 11; and
    a positive electrode solid electrolyte.

13. The positive electrode material according to claim 12,
wherein the positive electrode solid electrolyte includes a halide solid electrolyte.

14. The positive electrode material according to claim 12 or 13,
wherein the positive electrode solid electrolyte includes a sulfide solid electrolyte.

15. A battery comprising:

    a positive electrode including the positive electrode material according to any one of claims 12 to 14;
    a negative electrode; and
    an electrolyte layer disposed between the positive electrode and the negative electrode.

16. The battery according to claim 15,
wherein the electrolyte layer contains at least one selected from the group consisting of a solid electrolyte having the same composition as that of the solid electrolyte contained in the covering layer and a solid electrolyte having the same composition as that of the positive electrode solid electrolyte.

17. The battery according to claim 15,
wherein the electrolyte layer contains a halide solid electrolyte having a composition different from a composition of the solid electrolyte contained in the covering layer and/or a composition of the positive electrode solid electrolyte.

18. The battery according to any one of claims 15 to 17,
wherein the electrolyte layer contains a sulfide solid electrolyte.

19. A method for producing the covered positive electrode active material according to any one of claims 1 to 11, the method comprising:

    processing the positive electrode active material and the solid electrolyte by a dry particle composing method,

wherein the processing by the dry particle composing method includes applying at least one mechanical energy selected from the group consisting of impact, compression, and shear to the positive electrode active material and the solid electrolyte.

20. The method for producing the covered positive electrode active material according to claim 19,
wherein a ratio Da/Dc of an average particle diameter Da of the positive electrode active material to an average particle diameter Dc of the solid electrolyte is greater than or equal to 2.

21. The method for producing the covered positive electrode active material according to claim 19,
wherein a ratio Da/Dc of an average particle diameter Da of the positive electrode active material to an average particle diameter Dc of the solid electrolyte is greater than or equal to 5.

# FIG. 1

<u>100</u>

102

101

# FIG. 2

<u>1000</u>

100

202

# FIG. 3

# FIG. 4A

FIG. 4B

## INTERNATIONAL SEARCH REPORT

International application No.

PCT/JP2021/002513

### A. CLASSIFICATION OF SUBJECT MATTER

Int. Cl. H01M4/36(2006.01)i, H01M4/505(2010.01)i, H01M4/525(2010.01)i, H01M4/62(2006.01)i, H01M10/052(2010.01)i, H01M10/0562(2010.01)i
FI: H01M4/36 C, H01M4/505, H01M4/62 Z, H01M10/0562, H01M10/052, H01M4/525

According to International Patent Classification (IPC) or to both national classification and IPC

### B. FIELDS SEARCHED

Minimum documentation searched (classification system followed by classification symbols)
Int. Cl. H01M4/36, H01M4/505, H01M4/525, H01M4/62, H01M10/052, H01M10/0562

Documentation searched other than minimum documentation to the extent that such documents are included in the fields searched
Published examined utility model applications of Japan        1922-1996
Published unexamined utility model applications of Japan   1971-2021
Registered utility model specifications of Japan                  1996-2021
Published registered utility model applications of Japan     1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2001-52733 A (MATSUSHITA ELECTRIC INDUSTRIAL CO., LTD.) 23 February 2001, entire text, all drawings | 1-21 |
| A | CN 110931730 A (ZHEJIANG FENGLI NEW ENERGY TECHNOLOGY CO., LTD.) 27 March 2020, entire text, all drawings | 1-21 |
| A | JP 2015-513180 A (NEXEON LIMITED) 30 April 2015, entire text, all drawings | 1-21 |
| A | JP 2009-87682 A (TDK CORP.) 23 April 2009, entire text, all drawings | 1-21 |

☐ Further documents are listed in the continuation of Box C.          ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18.03.2021 | 30.03.2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
|---|
| PCT/JP2021/002513 |

| Patent Documents referred to in the Report | Publication Date | Patent Family | Publication Date |
|---|---|---|---|
| JP 2001-52733 A | 23.02.2001 | (Family: none) | |
| CN 110931730 A | 27.03.2020 | (Family: none) | |
| JP 2015-513180 A | 30.04.2015 | US 2014/0349183 A1<br>entire text, all<br>drawings<br>WO 2013/128201 A2<br>EP 2820703 A<br>CN 104137308 A<br>KR 10-2014-0141590 A | |
| JP 2009-87682 A | 23.04.2009 | US 2009/0087660 A1<br>entire text, all<br>drawings<br>EP 2043183 A2<br>CN 101399336 A | |

Form PCT/ISA/210 (patent family annex) (January 2015)

**EP 4 131 489 A1**

**Patent documents cited in the description**

- WO 2018038037 A
- WO 2019135322 A